# EUROPEAN PATENT APPLICATION

(11) **EP 4 567 256 A1**
(43) Date of publication of application: **11.06.2025**
(21) Application number: 23213899.0
(22) Date of filing: 04.12.2023
(51) Int. Cl.: F01D 11/02, F01D 25/32, F16J 15/447, F16J 15/00

(54) **SEALING SYSTEM FOR A STEAM TURBINE**

(71) Applicant: Siemens Energy Global GmbH & Co. KG, 81739 München (DE)
(72) Inventor: Korista, Milan, 61800 Brno (CZ); Korjenic, Kemal, Lawrenceville, GA 30046 (US); Nantl, Vaclav, 618 00 Brno (CZ)

(57) **Abstract**

The invention concerns a sealing system for a steam turbine, consisting of at least one labyrinth seal, the labyrinth seal comprising at least one seal housing (1) with a couple of grooves (2) and a rotor with a couple of sealing tips, wherein the sealing tips engages in the grooves (2). The sealing house (1) contains a drainage system (3) with allows liquid in the grooves (2) to dissipate.

## Description

Subject of the invention is a sealing system for backpressure steam turbines, consisting of at least one labyrinth seal, according top of the independent claim 1.

A labyrinth seal is a type of mechanical seal used to prevent the leakage of fluids or gases between two components, typically in rotating machinery such as pumps, compressors, or turbines. It consists of a series of specially designed grooves or channels that create a tortuous path for the fluid or gas to pass through. The basic principle behind a labyrinth seal is to create multiple barriers or obstacles that the fluid or gas must navigate through, which significantly reduces the pressure differential and minimizes the leakage. The labyrinth seal takes advantage of the viscous drag and turbulence generated by the rotating components to impede the flow of the fluid or gas.

The seal consists of a stationary component (stator) and a rotating component (rotor). The stator contains the grooves or channels, while the rotor has corresponding features that interlock with the stator. The grooves on the stator and rotor are designed in a complex pattern, creating a maze-like structure. The fluid or gas must pass through these narrow gaps and negotiate a series of twists and turns. The clearance gaps between the rotor and stator are deliberately small but allow for minimal axial movement. This ensures that the fluid or gas must travel through the labyrinthine path rather than bypassing it. As the fluid or gas enters the first groove, it encounters resistance due to the narrow clearance. This friction causes energy loss and generates turbulence, which further impedes the flow. The fluid or gas then encounters subsequent grooves, each designed to create additional barriers and turbulence, further reducing the pressure differential and leakage potential. By the time the fluid or gas reaches the end of the labyrinth path, the pressure differential has decreased significantly. The seal design aims to achieve pressure equalization between the high-pressure and low-pressure sides, preventing leakage across the seal.

Labyrinth seals are effective in sealing applications because they rely on the complex geometry and tortuous path to impede the flow of fluid or gas. They are commonly used in applications where traditional seals, such as O-rings or gaskets, may not be suitable due to high speeds, high temperatures, or aggressive environments.

If steam turbines operate with wet steam it can leads to a malfunction of the steam turbine steam labyrinth sealings, because there is a risk that the inner cavities of the steam sealing are flooding with liquid phase of the steam. That situation can occur in case of the steam sealing of the backpressure steam turbine dealing with wet steam at the exhaust or steam turbine dealing with wet steam at the inlet, in the inner parts and exhaust section too. The point is that backpressure steam sealing system does not use external steam buffering system so that the steam flow in the backpressure turbine inside of its steam seals is from the turbine inner pressurized space to the outer turbine space. If the turbine deals inside with wet steam the liquid phase precipitating from the steam is due to the inertia effects including gravity separated from the main steam flow and has tendency to fill various grooves of the sealing system. In case of retractable labyrinth seal segments filled grooves of the labyrinth segments can block the segment parts to move in case of the rotor comes to the contact with segment part. Since the rotor movement is high frequency movement the water filling the grooves down the labyrinth segments is not able to move away inside the groove as fast as necessary and increases stiffness of the rotor - sealing system. That might lead to the retuning the turbine critical speed (spectrum of natural frequencies) due to the high impedance of retractable labyrinth segments in case of rotor to sealing contact. Externally such situation can appear as high turbine vibration.

The task of the invention is to overcome the disadvantages of existing labyrinth seals.

The task is solved by the features of the independent patent claim 1. Further advantages of the invention which can be used individually or in combination are the subject of the subclaims.

The inventive sealing system for a backpressure steam turbine, consisting of at least one labyrinth seal, the labyrinth seal comprising at least one seal housing with a couple of grooves and a rotor with a couple of sealing tips, whereby the sealing tips engaging in the grooves is characterized in that, the sealing house contains a drainage system with allows water (liquid) in the grooves, to dissipate.

If the liquid is taken out of the grooves of the labyrinth segments, then there is no blocking effect against the segment moving.

A first embodiment of the invention provides that the drainage system is configured in that way, that liquid is carried away from the grooves by gravity.

Such an embodiment is simple, cheap, and low susceptibility to interference.

According to a further embodiment of the invention the drainage system comprising, at a minimum, one drain hole, preferably in each groove, which is arranged at the lowest point of the grooves. This ensures that the liquid can be drained off from the grooves completely.

Further embodiments and advantage of the invention will be described in the following on the drawings. It shows:
- Fig. 1:: an axial view of a sealing housing for an inventive sealing system;
- Fig.2:: a detail view of detail 3 from figure 1.

The figures show only the basic structure of the invention, which contains only the features necessary to describe the invention. Identical or functionally identical parts are designated with the same reference signs in both figures.

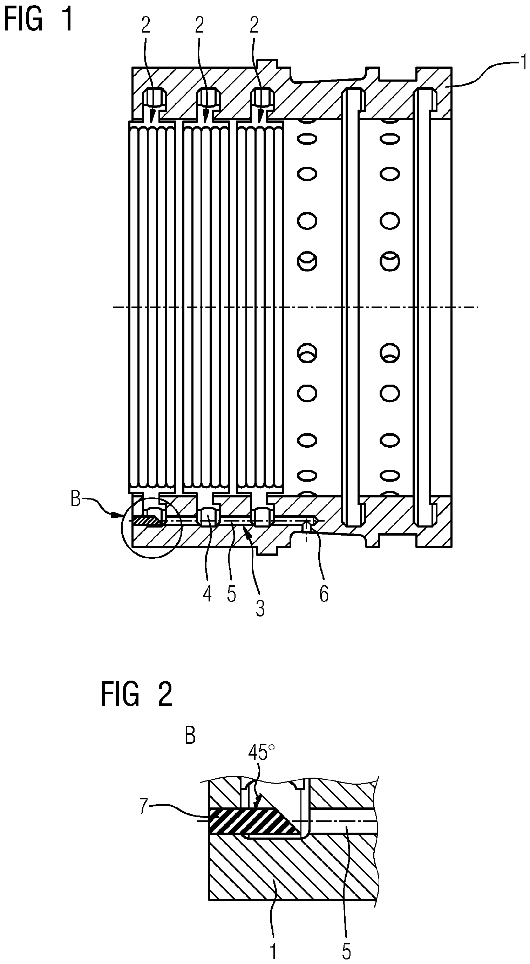

Fig. 1 shows an axial view of a sealing housing 1 for an inventive sealing system for a steam turbine. The sealing system consisting of at least one labyrinth seal, the labyrinth seal comprising of the seal housing 1 with a couple of grooves 2 and a rotor with a couple of sealing tips, whereby the sealing tips engaging in the grooves 2. For a better understanding of the invention fig. 1 shows only the seal housing 1 without the rotor. The sealing house 1 contains a drainage system 3 with allows liquid in the grooves 2, to dissipate. The drainage system 3 is configured in that way, that liquid is carried away from the grooves 2 by gravity. For this, the drainage system 3 comprising, drain holes 4 in each groove 2, which is arranged at the lowest point of the grooves 2. If liquid enters the grooves 2, the liquid is flowing due to the gravity, to the lowest point of the grooves 2. From there the liquid flows through the, at the lowest point of the grooves 2, essentially radially arranged drain holes 4 and an essentially axially drainpipe 5, which is connect with the drain holes 4 and formed in the sealing housing 1 to an exit 6. The draining system 3 is very easily build by radial and axial holes.

Fig. 2 shows detail B in fig. 1. As shown in fig. 2 the axially drainpipe 5 could be build by a blind hole in the sealing house 1, wherein the open end of the blind hole is closed by a closing plug 7. For draining the liquid out of the sealing housing 1 the exit 6 is built by a radial hole in the sealing house 1 as shown in Fig. 1.

## Claims

1. Sealing system for a steam turbine, consisting of at least one labyrinth seal, the labyrinth seal comprising at least one seal housing (1) with a couple of grooves (2) and a rotor with a couple of sealing tips, whereby the sealing tips engaging in the grooves (2)
**characterized in that**,
the sealing house (1) contains a drainage system (3) with allows liquid in the grooves (2), to dissipate.

2. Sealing system according claim 1,
**characterized in that**,
the drainage system (3) is configured **in that** way, that liquid is carried away from the grooves (2) by gravity.

3. Sealing system according claim 1 or 2,
**characterized in that**,
the drainage system (3) comprising, at a minimum, one drain hole (4) in each groove (2), which is arranged at the lowest point of the grooves (2).
